(19) Europäisches Patentamt

European Patent Office

Office européen des brevets

(11) Publication number : **0 325 582 B1**

(12) **EUROPEAN PATENT SPECIFICATION**

(45) Date of publication of patent specification :
08.05.91 Bulletin 91/19

(21) Application number : 87904474.1

(22) Date of filing : 29.06.87

(86) International application number :
PCT/US87/01552

(87) International publication number :
WO 88/02657 21.04.88 Gazette 88/09

(51) Int. Cl.⁵ : **B01D 46/12, B01D 46/52**

(54) **MOLDED PANEL FILTER.**

(30) Priority : 07.10.86 US 916270

(43) Date of publication of application :
02.08.89 Bulletin 89/31

(45) Publication of the grant of the patent :
08.05.91 Bulletin 91/19

(84) Designated Contracting States :
**DE FR GB IT**

(56) References cited :
EP-A- 0 053 879
DE-A- 1 436 284
DE-A- 2 137 309
GB-A- 1 075 376

(73) Proprietor : **ALLIED-SIGNAL INC. (a Delaware corporation)**
**Columbia Road and Park Avenue P.O. Box 2245R**
**Morristown New Jersey 07960 (US)**

(72) Inventor : **THORNTON, Donald, Irving**
**64 Kalmer Road**
**Warwick, RI 02886 (US)**
Inventor : **RODMAN, Clarke, Alden**
**51 Bond Road**
**East Providence, RI 02915 (US)**

(74) Representative : **Turner, Alan Reginald**
**BENDIX LIMITED Douglas Road**
**Kingswood, Bristol BS15 2NL (GB)**

EP 0 325 582 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a molded panel fluid filter for the air induction system of an internal combustion engine.

Reference is made to US-A-4,661,132 and 4,636,231 both of which were filed on August 15, 1985 and which are owned by the Assignee of the present invention. The disclosures of these prior applications are incorporated herein by reference.

Existing panel filters for air cleaners used in the air induction system of an internal combustion engine usually consist of water laid pleated medium. The medium is supported by a screen and carries a urethane of plastisol sealing flange.

In the Specification DE-A-1436284 there is described a fluid filter formed of several filter layers. Specifically one filter element described therein consists of three layers of different materials the two outer layers consisting of thermoplastic fibers. The filter element is assembled by joining circumferential edge portions of the outer layers by the application of heat whilst ensuring that the main or central area is unaffected by the heat. By such construction the two outer layers trap an intermediate absorbant layer of loose cotton or other fibre. As in the case of the other prior proposals referred to such filters have the shortcomings that they require a plurality of parts and substantial labour content in the manufacturing process.

Accordingly it is an object of the present invention to reduce the aforesaid shortcomings by providing a molded panel filter which is more susceptible to automated manufacture.

According to the present invention there is provided a fluid filter element including a first layer comprising a first batt of fibers containing thermoplastic material, said first batt having a main body portion and a marginal edge portion circumscribing said main body portion, the thermoplastic material in said marginal edge portion having been heated and/or compressed to stiffen said marginal edge portion and said element further including a second filtering layer containing a thermplastic material and bonded by heating at its circumferential edge portion to the marginal edge portion of the first filtering medium, and characterized in that said first batt consists of nonwoven randomly arrayed fibers and said second layer comprises a second batt of nonwoven randomly arrayed fibers and said thermoplastic material, the fibers in said second batt being stiffened, compressed and molded into a convoluted shaped portion, its circumferential edge portion containing fibers stiffened by said thermoplastic material to provide a support and sealing structure complementary to said marginal edge portion, said marginal edge portion being sealed to said circumferential edge portion the fibers of the main body portion of said first batt being substantially uncompressed so that the fibers of the second batt are more dense than the fibers of the first batt and so that the first batt provides a filter structure that is more open than the second batt, for receiving fluid to be filtered first through said first batt and then through said second batt.

In a practical application, both filter layers can include either thermoplastic material or thermoplastic fibers softened when the portions are heated and molded in a press, as discussed in the aforementioned prior U.S. Patents.

As taught in the said prior Patents, by increasing the temperature on one side of the mold while maintaining the remaining portion of the mold at a cooler temperature may cause the fibers on the heated side of the mold to fuse more than the fibers on the cooler side to produce a gradient density effect when required. Such gradient density effect can also be enhanced by simultaneously applying pressure along with heat, as also discussed in the aforementioned prior Patent.

Taken to the extreme, a nonpermeable supporting marginal edge portion can be made an integral part of the filter element by applying sufficient heat and/or pressure to the edge portions.

Typically the inner surface of the convoluted shape portion has a less open fiberous structure than the open batt-like structure of the first layer, but has a high bulk fiber network on the inner convoluted surface. Moreover, the surface of the convoluted member which can be as dense as water laid filter paper as used in some existing filters and removes such contaminants by sieving any contaminated particles from the fluid stream which make their way through the more open fiberous webs of the first layer.

The invention will now be further discribed by way of examples with reference to the accompanying drawing, in which

Figure 1 is a perspective view of a filter element made pursuant to the teachings of the present invention with the layers separated from one another ;

Figure 2 is a cross-sectional view taken transversely through pleats of the convoluted shape portion and illustrating the filtering members after they have been assembled ;

Figure 3 is a view similar to Figure 2 but illustrating a different embodiment of the invention ; and

Figure 4 is a view similar to Figure 2 but illustrating still another embodiment of the invention.

Referring now to the drawing, the fluid filter element generally indicated by the numeral 10 consists of a first filtering layer generally indicated by the numeral 12 and a second filtering layer generally indicated by the numeral 14. The first filtering layer 12 consists of a batt of nonwoven, randomly arrayed fibers which is prepared by the method described in both of the above-identified U.S. Patents. The fibers in the batt are either a mixture of fibers containing a thermoplastic fiber (such as polyvinyl) or is a mixture of fibers impregnated with a crosslinkable thermoplastic resin or a two-stage thermosetting resin. The batt is cut to size and is placed in a ring-shaped heated mold as described in the above-identified US-A-4,636,231. The mold is heated to a predetermined temperature, somewhat above the stick point of the thermoplastic fiber blended in the batt or the resin impregnant. The mold is closed at a force of, for example, 1 ton while the ring-shaped die is heated to a termperature above the stick point of the thermoplastic material so that a marginal edge portion 16 is formed which is stiffened and compressed, due to the heat and pressure applied to the marginal edge portion 16, into a stiff, fluid impermeable support structure for a batt portion 18 of the first filtering medium 12 defined within the circumferential edge portion of 16. The batt portion 18, since it was never subjected to the heat and pressure to which the marginal edge portion 16 was subjected, retains its open characteristics so that air flow may pass through the batt portion 18 with very little restriction. The fibers in the batt portion 18 form a web that is especially adapted to capture fine particles in the fluid stream passing through the batt. Since the particles are captured throughout the depth of the batt as the fluid flow flows through the batt, the batt 18 is known as a depth-type filtering medium. Because the fibers in the batt 18 are not fixed in position, larger particles can pass through the batt 18 with relative ease> however, the fiber network of the batt 18 is effective in reducing the momentum of the heavier particles passing through it. Ideally, the butt 18 is capable of capturing 70% or more of the fine particles in the fluid stream passing through the filter element 10.

The second layer 14 is also made from a batt consisting of a nonwoven mixture of randomly arrayed fibers which is also made by the process disclosed in both of the aforementioned prior applications. The batt is cut into sections of appropriate size. A section is placed in a mold which is contoured in the proper shape to mold the second filter layer 14 into the shape illustrated. The second layer 14 is formed to have a longitudinally extending array of generally parallel pleats 20. The pleats have an inner surface 22 which face the first filtering medium 12 and opposite outer surface 24. The second layer is also formed to have circumferentially extending edge portion 26 which circumscribes the pleats 22 and is designed such that it registers with the marginal edge portion 16 when the filter element 10 is assembled as will be hereinafter described.

The batt from which the second layer 14 is manufactured, as described above, either contains a mixture of fibers including thermoplastic fibers such as vinyl or is impregnated with a resin. Accordingly, when the layer 14 is molded, the fibers can be stiffened either through the action of the crosslinking thermoplastic resin or curing of the thermosetting resin or through the action of the thermoplastic fibers acting as a "glue" holding the fibers together. Accordingly the filter element 10 is sufficiently stiff as to be self-supporting and does not reqire the screens and other support structure required by prior art panel filters.

It is also desirable but not essential that the second filtering layer be made to have density gradient, that is, that the density of the filtering medium increase in the direction of fluid flow through the medium, as described in US-A-4,661,132. The gradient in density is achieved by using male and female dies having the shapes of the pleats 20, and then heating the die which forms the side 24 of the layer 14 to a temperature above the setting point of the resin impregnant and/or above the stick point of the thermoplastic fibers. The die which forms the side 22 of the second layer 14 is maintained as substantially room temperature. As discussed in the aforementioned. US-A-4,661,132, a gradient density effect is produced by the differentially heated male and female molds and by applying pressure to the molds. Ideally, the temperature to which the outer side 24 is heated is sufficient that the passages between the fibers are made very small, so that the outer side 24 acts as a sieve or surface-type filtering media that is capable of removing almost all of the contaminate particles, thereby resulting in a filter with very high efficiency.

The surface 22 presents a less open filter medium than the batt 18, but still has a high bulk fiber network to be particularly adaptable for slowing and capturing particles. The other surface 24 can be as dense as the prior art water laid filter paper. Although the second filtering layer 14 is preferably made of gradient density, it is also within the scope of the present invention that the filtering layer 14 be of a uniform density which is achieved by maintaining both the male and female mold members at the same temperature during molding.

The first filtering layer 12 is assembled to the second filtering layer 14 by bonding the marginal edge 16 to the circumferential edge portion 26. Bonding may be achieved by use of adhesive, or preferably by heating the edges 16 and 26 to a temperature at which the thermosetting resins and/or the thermoplastic fibers become tacky and stick to one another,thereby securing the edges 16,26 together. If necessary, a sealant material may be applied over the marginal edges to thereby form a resilant seal to seal the filter when the filter is installed in the appropriate air cleaner housing (not shown). The sealant material can be applied at the time that the edges are secured together or at a later manufacturing step.

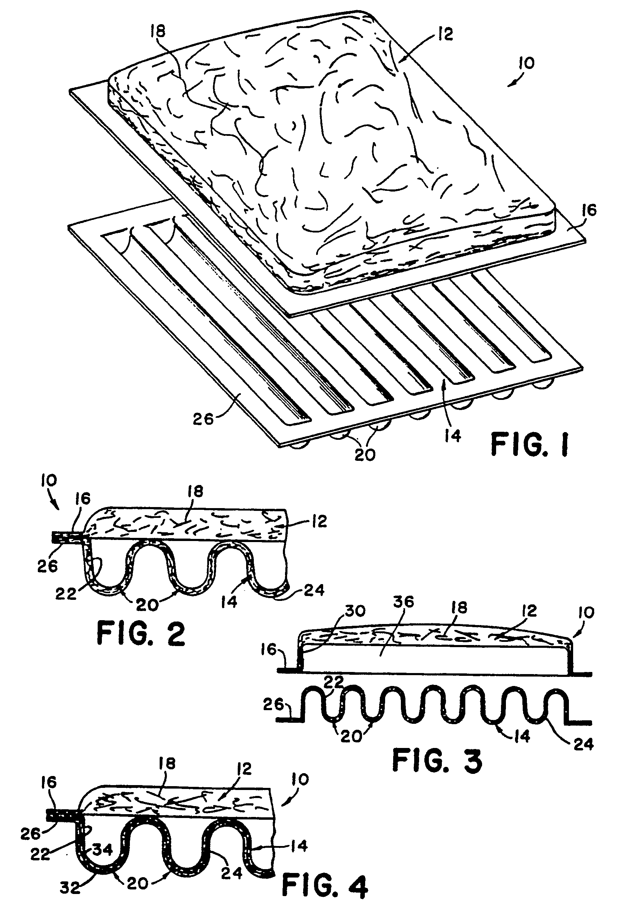

Referring now to the alternate embodiments of Figures 3 and 4, the embodiment of Figure 3 is substantially the same as the preferred embodiment, except that the first filtering layer 12 is formed with a ring-shaped die as illustrated in the aforementioned US-A-4,636,231 to thereby form a wall 30 which extends substantially parallel to the pleats 20 when the layers 12 and 14 are assembled. Accordingly, the first layer 12 defines a dish-shaped cavity 36 which receives the second layer 14. Referring to the embodiment of Figure 4, the said density gradient may also be achieved by laminating batt materials together before the second filtering layer 14 is molded. The permeability of the batt-like media is a function of several factors, such as the size and length of the fibers from which the batt is made. Accordingly, two different batts 32, 34 may be made of different fibers mixtures and then placed together in the mold to form the second filtering layer 14.

By way of example, but not by way of limitation, the following working examples of the invention are given :

Example 1.

A filter element is manufactured consisting of a first filter layer which comprises a 60/40 (by weight) mix of coarse and fine polyester fiber. The fiber mixture provides an open fiber fleece and is impregnated with a crosslinked polyvinyl acetate latex. The marginal edge portion of the batt is formed by placing the batt in a heated die which is heated to a temperature sufficient to set the acetate latex and is closed at a pressure of about 1 ton. The convoluted filtering layer is a mixture of 60% by weight of wood pulp, 15% by weight of comparable size synthetic fiber staples, and the remainder synthetic binder fiber, such as a copolymer PVC-PVAC or a low melting polyester. The batt thereof is placed between appropriate male and female dies, one of which is heated to a temperature just above the stick point of the binder fiber of 121°C (250°F), and the closing pressure of the press is regulated to several hundred psi, sufficient to form the filtering media without densifying it sufficiently to cause it to be fluid impermeable.

Example 2.

The first layer is formed as described above. The convoluted layer of the filter element is made from a nonwoven two-ply, the outer ply (the ply facing away from the batt portion) being 85% by weight wood pulp, 15% by weight of comparable size fiber staple. The inner ply is 60% (by weight) self-supporting fiber with high surface area polyester fiber blended with a copolymer PVC-PVAC. The composite is bonded with 15-20% (by weight) of a crosslinked polyvinyl acetate latex, although other thermoplastic binders could have been employed. The outer ply is usually two-thirds of the weight of the inner ply. The batt is then formed as described above in Example 1.

Claims

1. Fluid filter element (10) including a first layer (12) comprising a first batt of fibers containing thermoplastic material, said first batt having a main body portion (18) and a marginal edge portion (16) circumstribing said main body portion (18), the thermoplastic material in said marginal edge portion having been heated and/or compressed to stiffen said marginal edge portion (16) and said element further including a second filtering layer (14) containing a thermoplastic material and bonded by heating at its circumferential edge portion (26) to the marginal edge portion (16) of the first filtering medium, and characterized in that said first batt consists of nonwoven randomly arrayed fibers and said second layer (14) comprises a second batt of nonwoven randomly arrayed fibers and said thermoplastic material, the fibers in said second batt being stiffened, compressed and molded into a convoluted shaped portion (20), its circumferential edge portion (26) containing fibers stiffened by said thermoplastic material to provide a support and sealing structure complimentary to said marginal edge portion (16), said marginal edge portion (16) being sealed to said circumferential edge portion (26) the fibers of the main body portion (18) of said first batt being substantially uncompressed so that the fibers of the second batt are more dense than the fibers of the first batt and so that the first batt provides a filter structure that is more open than the second batt, for receiving fluid to be filtered first through said first batt and then through said second batt.

2. Fluid filter element as claimed in claim 1, further characterized in that said marginal edge portion (16) and said circumferential edge portion (26) are fluid impermeable.

3. Fluid filter element as claimed in claim 1 or 2, further characterized in that the first filtering layer (12) is a depth type medium and said second filtering layer (14) includes a surface for sieving particle contaminates from the fluid being filtered.

4. Fluid filter element as claimed in claim 1, 2 or 3 further characterized in that said convoluted shaped portion (20) comprises an array of substantially parallel pleats.

5. Fluid filter element as claimed in any of claims 1-4, further characterized in that at least some of the fibers in said marginal edge portion (16) are fused with at least some of the fibers in the circumferential edge portion (26) to join said media together.

6. Fluid filter element as claimed in any of claims 1-5, further characterized in that said second filtering layer (14) is a mixture of wood pulp fibers and synthetic fibers.

7. Fluid filter element as claimed in any of claims 1-6 further characterized in that said first layer (12) includes synthetic fibers.

8. Fluid filter element as claimed in any of claims 1-7, further characterized in that the density of said second filtering medium (14) varies in the direction of fluid flow through the second filtering medium (14).

9. Fluid filter element as claimed in claim 8, further characterized in that said second layer (14) has as inner surface (22) facing said first layer (12) when assembled and an opposite outer surface (24), the fiber density at the outer surface (24) being greater than that at the inner surface (22).

10. Fluid filter element as claimed in claim 8 or 9 further characterized in that the second filtering medium (14) is comprised of a more dense ply (32) and a less dense ply (34).

## Ansprüche

1. Fluidfilterelement (10), umfassend eine erste Lage (12) mit einer ersten Matte aus Fasern, die thermoplastisches Material enthält, wobei die erste Matte einen Hauptkörperteil (18) und einen Randkantenteil (16) hat, der den Hauptkörperteil (18) umgibt, das thermoplastische Material in dem Randkantenteil erhitzt und/oder komprimiert ist, um den Randkantenteil (16) zu versteifen, und wobei das Element weiterhin eine zweite Filterlage (14) umfaßt, die ein thermoplastisches Material enthält und durch Erhitzen an ihrem Umfangskantenteil (26) an den Randkantenteil (16) des ersten Filtermediums gebunden ist, dadurch gekennzeichnet, daß die erste Matte aus nichtgewebten willkürlich angeordneten Fasern besteht und die zweite Lage (14) eine zweite Matte aus nichtgewebten willkürlich angeordneten Fasern und das thermoplastische Material umfaßt, wobei die Fasern in der zweiten Matte versteift, komprimiert und geformt sind zu einem geknäulten Profilteil (20), dessen Umfangskantenteil (26) Fasern enthält, die durch das thermoplastische Material versteift sind, um eine Trag- und Abdichtausführung zu schaffen komplementär zu dem Randkantenteil (16), der mit dem Umfangskantenteil (26) verschweißt ist, wobei die Fasern des Hauptkörperteils (18) der ersten Matte im wesentlichen nicht komprimiert sind, so daß die Fasern der zweiten Matte dichter als die Fasern der ersten Matte sind, und so daß die erste Matte eine Filterstruktur schafft, die offener als die zweite Matte ist für das Empfangen von zu filterndem Fluid zuerst durch die erste Matte und dann durch die zweite Matte hindurch.

2. Fluidfilterelement nach Anspruch 1, weiter dadurch gekennzeichnet, daß der Randkantenteil (16) und der Umfangskantenteil (26) fluidundurchlässig sind.

3. Fluidfilterelement nach Anspruch 1 oder 2, weiter dadurch gekennzeichnet, daß die erste Filterlage (12) ein Medium der Tiefenart ist und die zweite Filterlage (14) eine Fläche zum Absieben von Teilchenverunreinigungen aus dem gefilterten Fluid umfaßt.

4. Fluidfilterelemente nach Anspruch 1, 2 oder 3, weiter dadurch gekennzeichnet, daß der geknäulte Profilteil (20) eine Reihe von im wesentlichen parallelen Falten aufweist.

5. Fluidfilterelement nach irgendeinem der Ansprüche 1 bis 4, weiter dadurch gekennzeichnet, daß wenigstens gewisse der Fasern in dem Randkantenteil (16) mit wenigstens gewissen der Fasern in dem Unfangskantenteil (26) verschmolzen sind, um die Medien miteinander zu verbinden.

6. Fluidfilterelement nach irgendeinem der Ansprüche 1 bis 5, weiter dadurch gekennzeichnet, daß die zweite Filterlage (14) ein Gemisch aus Holzstoff- bzw. Zellstoffasern und synthetischen Fasern ist.

7. Fluidfilterelement nach irgendeinem der Ansprüche 1 bis 6, weiter dadurch gekennzeichnet, daß die erste Lage (12) synthetische Fasern umfaßt.

8. Fluidfilterelement nach irgendeinem der Ansprüche 1 bis 7, weiter dadurch gekennzeichnet, daß die Dichte des zweiten Filtermediums (14) sich in Richtung der Fluidströmung durch das zweite Filtermedium (14) hindurch ändert.

9. Fluidfilterelement nach Anspruch 8, weiter dadurch gekennzeichnet, daß die zweite Lage (14) eine Innenfläche (22), die nach dem Zusammenfügen der ersten Lage (12) zugewandt ist, und eine gegenüberliegende Außenfläche (24) hat, und die Faserdichte an der Außenfläche (24) größer als diejenige an der Innenfläche (22) ist.

10. Fluidfilterelement nach Anspruch 8 oder 9, weiter dadurch gekennzeichnet, daß das zweite Filtermedium (14) eine dichtere Schicht (32) und eine weniger dichte Schicht (34) aufweist.

## Revendications

1. Un élément de filtration pour fluide (10) incluant une première couche (12) comprenant une première nappe de fibres contenant une matière thermoplastique, ladite première nappe ayant une partie de corps principale (18) et une portion latérale marginale (16) entourant ladite partie de corps principale (18), la matière thermoplastique dans ladite partie latérale marginale ayant été chauffée et/ou comprimée pour rigidifier ladite partie latérale marginale (16) et ledit élément comprenant de plus une deuxième couche de filtration (14) contenant une matière thermoplastique et liée par chauffage sur sa partie latérale périphérique (26) à la partie latérale marginale (16) du premier milieu de filtration, et caractérisé en ce que ladite nappe consiste en fibres non tissées disposées au hasard et ladite deuxième couche (14) comprend une deuxième nappe de fibres non tissées disposées au hasard et de ladite matière thermoplastique, les fibres dans ladite deuxième nappe étant rigidifiée, comprimée et moulée en une partie de forme convolutée (20), sa partie latérale périphérique (26) contenant des fibres rigidifiées par ladite matière thermoplastique pour fournir un support et une structure d'étanchéité complémentaire à ladite partie latérale marginale (16), ladite partie latérale marginale (16) étant scellée à ladite partie latérale périphérique (26), les fibres de la partie de corps principale (18) de ladite première nappe étant substantiellement non comprimée pour que les fibres de la deuxième nappe soient plus denses que les fibres de la première nappe et pour que la première nappe fournisse une structure de filtration qui est plus ouverte que la deuxième nappe, le fluide reçu étant filtré d'abord à travers ladite première nappe et ensuite à travers ladite deuxième nappe.

2. Un élément de filtration pour fluide conforme à la revendication 1, caractérisé en ce que, en outre, ladite partie latérale marginale (16) et ladite partie latérale périphérique (26) sont imperméables au fluide.

3. Un élément de filtration pour fluide conforme à la revendication 1 ou 2, caractérisé en ce que, en outre, la première couche de filtration (12) est un milieu de type à action profonde et ladite deuxième couche de filtration (14) comprend une surface tamisant les particules contaminant le fluide à filtrer.

4. Un élément de filtration pour fluide conforme à la revendication 1, 2 ou 3, caractérisé en ce que, en outre, ladite partie de forme convolutée (20) comprend une série de plis substantiellement parallèles.

5. Un élément de filtration pour fluide conforme à l'une quelconque des revendications 1 à 4, caractérisé en ce que, en outre, au moins certaines des fibres de ladite partie latérale marginale (16) sont fusionnées avec au moins certaines des fibres de ladite partie latérale périphérique (26) pour joindre lesdits milieux ensemble.

6. Un élément de filtration pour fluide conforme à l'une quelconque des revendications 1 à 5, caractérisé en ce que, en outre, ladite deuxième couche de filtration (14) est un mélange de fibres de pâte de bois et de fibres synthétiques.

7. Un élément de filtration pour fluide conforme à l'une quelconque des revendications 1 à 6, caractérisé en ce que, en outre, ladite première couche (12) comprend des fibres synthétiques.

8. Un élément de filtration pour fluide conforme à l'une quelconque des revendications 1 à 7, caractérisé en ce que, en outre, la densité dudit deuxième milieu de filtration (14) varie dans la direction de l'écoulement du fluide à travers le deuxième milieu de filtration (14).

9. Un élément de filtration pour fluide conforme à la revendication 8, caractérisé en ce que, en outre, la deuxième couche (14) possède une surface interne (22) faisant face à ladite première couche (12) lorsqu'assemblées et une surface opposée externe (24), la densité des fibres de la surface externe (24) étant plus grande que celle de la surface interne (22).

10. Un élément de filtration pour fluide conforme à la revendication 8 ou 9, caractérisé en ce que, en outre, le deuxième milieu de filtration (14) est constitué d'une couche (32) plus dense et d'une couche (34) moins dense.

FIG. 1

FIG. 2

FIG. 3

FIG. 4